# DEMANDE DE BREVET EUROPEEN

(11) **EP 3 905 401 A1**
(43) Date de publication de la demande: **03.11.2021**
(21) Numéro de dépôt: 21171113.0
(22) Date de dépôt: 29.04.2021
(51) Int. Cl.: H01M 8/04119, H01M 8/04223, H01M 8/0438, H01M 8/04746, H01M 8/04492

(54) **PROCEDE DE PILOTAGE D'UNE PILE A COMBUSTIBLE**

(30) Priorité: 30.04.2020 FR 2004318
(71) Demandeur: SYMBIO, 38600 Fontaine (FR)
(72) Inventeur: PAGANELLI, Gino, 1741 COTTENS (CH); JEANRICHARD-DIT-BRESSEL, Lionel, 1782 FORMANGUEIRES (CH)
(74) Mandataire: Lavoix

(57) **Abrégé**

Méthode de purge du circuit anodique (10) d'alimentation en hydrogène d'une pile (1) à combustible dans laquelle on fournit de l'hydrogène à une pression nominale (Pₙₒₘ) à l'entrée de la pile. Selon l'invention, on répète, à une périodicité prédéterminée, les étapes suivantes :
- on commande l'ouverture d'une vanne de purge (2) de l'hydrogène agencée sur la sortie du circuit anodique (10) ;
- on mesure la pression de l'hydrogène à l'entrée du circuit anodique de la pile et on compare la valeur mesurée avec une valeur seuil de la pression (P_{low}) et
- on ferme la vanne de purge lorsque la pression mesurée est égale ou inférieure à la valeur seuil de la pression (P_{low}).

## Description

### DOMAINE TECHNIQUE ET ÉTAT DE LA TECHNIQUE ANTÉRIEURE

La présente invention se rapporte aux piles à combustible, en particulier aux piles à combustible alimentées en hydrogène et concerne un procédé de pilotage d'une pile à combustible permettant d'effectuer une purge des gaz et de l'eau accumulés à l'anode de la pile.

Les piles à combustible sont utilisées comme source d'énergie dans diverses applications, notamment dans les véhicules électriques. Dans les piles à combustible du type à électrolyte à membrane polymère (PEMFC), on utilise l'hydrogène comme combustible qui est fourni à l'anode de la pile à combustible, alors qu'à la cathode est fourni l'oxygène en tant que comburant. Les piles à combustible à membrane polymère (PEMFC) comprennent un assemblage membrane-électrode (MEA pour Membrane Electrode Assembly) comprenant une membrane électrolytique en polymère solide échangeuse de protons et non conductrice de l'électricité, ayant le catalyseur anodique sur l'une de ses faces et le catalyseur cathodique sur la face opposée. Un assemblage membrane-électrode (MEA) est pris en sandwich entre une paire d'éléments électriquement conducteurs, ou plaques bipolaires, moyennant des couches de diffusion de gaz, couches réalisées par exemple en tissu de carbone. Les plaques bipolaires sont généralement rigides et thermiquement conductrices. Elles servent principalement de collecteurs de courant pour l'anode et la cathode et comportent par ailleurs des canaux pourvus d'ouvertures appropriées pour répartir les réactifs gazeux de la pile à combustible sur les surfaces des catalyseurs d'anode et de cathode respectifs et pour évacuer l'eau produite à la cathode. Une cellule de pile à combustible est ainsi formée par un MEA, incluant les couches de diffusion de gaz, et deux plaques monopolaires.

Une pile à combustible peut comprendre une cellule unique ou une pluralité de cellules réalisées sous forme d'un empilement de plaques. Un empilement est ainsi constitué de plusieurs cellules individuelles reliées en série.

En fonctionnement, une tension électrique est produite aux bornes de la pile suite à une réaction d'oxydation électrochimique de l'hydrogène à l'anode et à une réaction électrochimique de réduction de l'oxygène à la cathode. Les résultants de ces réactions sont la production de l'électricité aux bornes des électrodes, ainsi que de l'eau et de la chaleur à la cathode de la pile. On a constaté par ailleurs que de l'eau résiduelle et des gaz résiduels s'accumulent à l'anode de la pile et qu'il est nécessaire de les évacuer pour assurer le bon fonctionnement de la pile à combustible.

On connaît dans l'état de la technique des solutions relatives à l'utilisation d'une vanne de purge installée sur le circuit d'alimentation en hydrogène de la pile, vanne qui est commandée pour purger régulièrement, de façon continue ou discontinue, le circuit d'alimentation afin d'éliminer vers l'atmosphère les impuretés résiduelles contenues dans le gaz d'alimentation et l'eau présente dans les canaux anodiques. Afin d'éviter les risques liés à l'apparition de dégâts irréversibles dans la pile en cas de purge insuffisante, on purge souvent plus que nécessaire, notamment en cas de présence abondante de l'eau liquide à l'anode. Or, une telle pratique engendre une perte considérable d'hydrogène et présente en outre le risque d'enfreindre des contraintes réglementaires et sécuritaires en raison de la quantité d'hydrogène pur relâché.

Le document WO 2018/115630 décrit une solution pour pallier ce problème et qui consiste à relier la vanne de purge à un vase de réception de l'hydrogène purgé. On installe ainsi la vanne et le vase sur la sortie anodique de la pile et on redirige l'hydrogène purgé présent dans le vase vers l'entrée anodique de la pile à combustible. Ainsi, on récupère, certes, une partie de l'hydrogène purgé, mais au prix d'un réservoir supplémentaire et sans toutefois pouvoir adapter la fréquence ou la durée des purges aux conditions de fonctionnement de la pile.

Une autre solution a été proposée dans le document US 2015/0280260 qui décrit une méthode pour contrôler la vanne de purge d'hydrogène du circuit d'alimentation d'une pile à combustible de façon à évacuer l'eau liquide du circuit anodique, tout en garantissant une concentration d'hydrogène prédéterminée. Ainsi, le dispositif décrit dans ce document comprend une unité de contrôle et des moyens permettant d'estimer la quantité d'eau accumulée pour déterminer le moment d'ouverture de la vanne de purge. La durée d'ouverture de la vanne est également déterminée par l'unité de contrôle sur la base d'une estimation de l'évolution de la concentration d'hydrogène. Assurant plus de précision que les solutions précédentes en régime normal de fonctionnement, cette solution est basée sur des formules de calcul prenant en compte différents paramètres et constantes. De ce fait, elle comporte de nombreux capteurs et une boucle de réaction qui implique un certain retard. Par ailleurs, une telle méthode n'est pas suffisamment fiable en cas des perturbations, par exemple, en régime transitoire ou non stabilisé de la pile.

### EXPOSÉ DE L'INVENTION

Un objectif de l'invention est de remédier au moins en partie aux inconvénients des documents précités et de proposer une solution robuste et fiable permettant d'adapter la fréquence et la durée des purges en fonction de la quantité d'eau présente à l'anode et cela quelles que soient les conditions de fonctionnement de la pile.

L'objet de l'invention est atteint avec une méthode de purge du circuit anodique d'alimentation en hydrogène d'une pile à combustible dans laquelle on fournit de l'hydrogène à une pression nominale (Pₙₒₘ) à l'entrée de la pile, caractérisée en ce que l'on répète, à une périodicité prédéterminée, les étapes suivantes :
- on commande l'ouverture d'une vanne de purge de l'hydrogène agencée sur la sortie du circuit anodique ;
- on mesure la pression de l'hydrogène à l'entrée du circuit anodique de la pile et on compare la valeur mesurée avec une valeur seuil prédéterminée de la pression (P_{low})
- on ferme la vanne de purge lorsque la pression mesurée est égale ou inférieure à la valeur seuil prédéterminée de la pression (P_{low}).

Dans une pile à combustible à membrane échangeuse de protons, l'eau est produite à la cathode. Toutefois, de par la perméabilité de la membrane, une partie de l'eau produite à la cathode passe vers l'anode à travers la membrane échangeuse de protons. Dans la méthode de l'invention, on ouvre la vanne de purge afin d'évacuer l'eau liquide présente à l'anode et des gaz en effectuant en même temps un monitoring des valeurs de la pression à l'entrée de la vanne de purge. Selon l'invention, la vanne de purge reste ouverte jusqu'à ce qu'une limite basse de la pression mesurée est atteinte. De ce fait, la durée d'ouverture de la vanne de purge s'adapte à la quantité d'eau présente à l'anode. En effet, l'eau liquide étant plus visqueuse que le gaz, en l'occurrence l'hydrogène, plus il y a de l'eau à l'anode, plus il faudra du temps pour atteindre la valeur basse P_{low} de la pression et donc plus longtemps la vanne de purge doit rester ouverte. Ainsi, on adapte la durée de la purge automatiquement en fonction de la quantité d'eau présente à l'anode afin de purger le juste nécessaire quelles que soient les conditions et ceci en utilisant un seul capteur, le capteur de mesure de la pression de l'hydrogène à l'entrée de la pile. Selon la méthode de l'invention on peut mesurer la durée d'ouverture de la vanne de purge et on peut adapter ladite périodicité en fonction de la durée mesurée. Tel qu'expliqué plus haut, la durée de la purge s'allonge automatiquement en cas de présence d'eau à l'anode de façon à compenser le temps pendant lequel la vanne évacue de l'eau et non pas du gaz. Ainsi, le temps d'ouverture de la vanne de purge est proportionnel avec la quantité d'eau présente à l'anode de la pile. De ce fait, plus le temps s'allonge, plus on rapproche les purges, de manière à adapter la périodicité des purges en fonction de la durée de l'ouverture de la vanne de purge, et à pouvoir évacuer toute quantité d'eau excédentaire à l'anode de manière efficace.

L'alimentation en hydrogène de la pile peut se faire à partir d'un réservoir moyennant une électrovanne proportionnelle pilotée par un régulateur de pression relié à un capteur de pression. Ceci permet un réglage précis de la pression d'alimentation de la pile à combustible, le régulateur de pression étant relié à un capteur de pression placé à l'entrée de la pile pour contrôler l'ouverture de l'électrovanne.

Ledit régulateur de pression peut être désactivé pendant la durée d'ouverture de la vanne de purge. Ceci afin que la contre-réaction de la vanne proportionnelle ne vienne perturber l'évolution de la pression pendant la purge. Le régulateur est réactivé immédiatement après la fermeture de la vanne de purge.

Selon la méthode de l'invention, les valeurs de la pression P_{low} peuvent être comprises entre 70 et 95% de Pₙₒₘ. Lors des tests effectués en laboratoire, il s'est avéré que pour cette plage de valeurs de la pression, on arrivait à purger correctement une pile à combustible dans toutes les conditions de fonctionnement de celle-ci. La valeur P_{low} peut être constante ou adaptée en fonction des conditions de fonctionnement, par exemple en fonction du courant produit par la pile à combustible.

Les valeurs de la pression Pₙₒₘ peuvent être comprises entre 1,2 et 2 bar.

Ladite périodicité peut être comprise entre 2s et 20s pour une durée d'ouverture de la vanne de purge qui peut être comprise entre 500ms et 100ms. Ainsi, pour une durée d'ouverture longue les purges sont rapprochées et elle augmente avec la diminution de la durée d'ouverture de la vanne de purge.

Selon la méthode de l'invention, lors de l'ouverture de la vanne de purge on peut mesurer la durée au bout de laquelle la valeur de la pression P_{low} est atteinte en partant de la valeur Pₙₒₘ et on la compare à une durée maximum d'ouverture prédéfinie de la vanne de purge. Si la durée mesurée dépasse celle maximum, on arrive à identifier une situation de blocage en position fermée de la vanne de purge.

On peut par ailleurs, lors de la fermeture de la vanne de purge, mesurer la durée au bout de laquelle la valeur de la pression Pₙₒₘ est atteinte en partant de la valeur P_{low} de la pression et la comparer à une durée prédéfinie. Si la durée mesurée dépasse celle prédéfinie (on comprend que la pression n'atteint pas la valeur Pₙₒₘ), on en déduit un blocage en position ouverte de la vanne de purge.

L'objet de l'invention est également atteint avec un dispositif de mise en œuvre de la méthode selon l'invention.

Un autre objet de l'invention est l'utilisation du dispositif de mise en œuvre de la méthode selon l'invention dans une pile à combustible.

### BRÈVE DESCRIPTION DES DESSINS

L'invention sera mieux comprise grâce à la suite de la description, qui s'appuie sur les figures suivantes :
[Fig. 1] est une vue schématique du dispositif de mise en œuvre de la méthode de l'invention ;
[Fig. 2] est une représentation graphique illustrant l'évolution de la pression en fonction du temps ;
[Fig. 3] est une représentation graphique illustrant la relation entre la durée d'ouverture de la vanne de purge et la périodicité des purges.

Sur les différentes figures, les éléments identiques ou similaires portent la même référence. Leur description n'est donc pas systématiquement reprise.

### EXPOSÉ DÉTAILLÉ DE MODES DE RÉALISATION PARTICULIERS

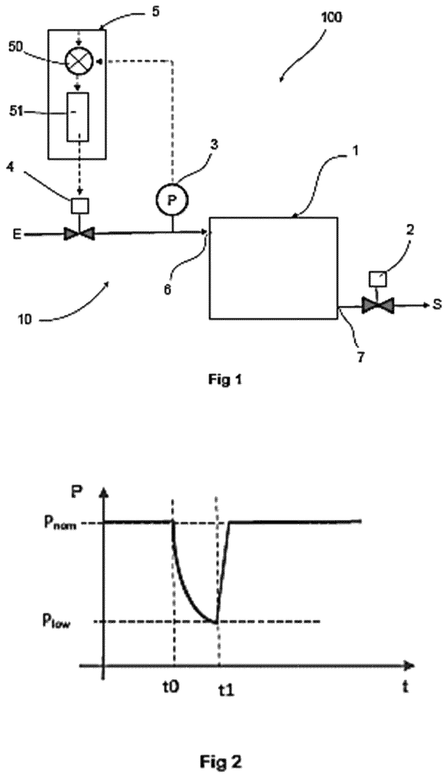

La figure 1 illustre de manière schématique un dispositif 100 de mise en œuvre de la méthode de l'invention installé sur le circuit anodique 10 d'une pile à combustible 1. Plus particulièrement, la figure 1 illustre la topologie du circuit anodique 10 de la pile entre une entrée E d'hydrogène, par exemple en provenance d'un réservoir d'hydrogène sous pression (non illustré) et une sortie S de la pile à pression atmosphérique. La pile à combustible 1 est alimentée en hydrogène par le biais d'une électrovanne proportionnelle 4. Cette électrovanne est pilotée par un régulateur 5 pour maintenir la pression à l'entrée 6 de la pile à une valeur prédéterminée. Pour ceci, on installe un capteur de pression 3 sur le circuit anodique juste avant l'entrée 6 de l'hydrogène dans la pile à combustible 1 et on le relie à l'entrée du régulateur 5. Le régulateur 5 est du type généralement connu, il fonctionne à l'aide d'un signal pseudo-analogique à modulation de largeur d'impulsion (connu aussi sous le nom de PWM pour Pulse With Modulation). Plus particulièrement, le signal de mesure en provenance du capteur 3 arrive au niveau d'un comparateur 50 du régulateur qui reçoit une valeur de consigne. La valeur sortant du comparateur 50 est transmise à une unité de commande 51 du régulateur qui actionne l'électrovanne proportionnelle 4. La consigne de pression Pₙₒₘ est générée par le contrôleur (ou unité de contrôle) de la pile à combustible. Elle peut être constante ou adaptée en fonction des conditions de fonctionnement, par exemple en fonction du courant produit par la pile à combustible.

Tel que visible à la figure 1, on installe sur le circuit anodique 10, après la sortie 7 de la pile, une électrovanne de purge 2 de type « tout ou rien » qui est pilotée par une unité de contrôle de la pile (non représentée). La purge 2 est de préférence positionnée à un point bas du collecteur de sortie du circuit anodique de façon à pouvoir drainer l'eau liquide. Dans une variante, non illustrée, on rajoute dans le circuit anodique 10 un moyen de recirculation d'hydrogène comportant par exemple un éjecteur Venturi agencé entre la vanne proportionnelle 4 et le capteur de pression 3 de manière à recirculer une partie du gaz en sortie 7 avant la vanne de purge 2.

La figure 2 représente de manière graphique le principe de mesure du temps d'ouverture de la vanne de purge 2, les valeurs du temps, en secondes, étant représentées en abscisse et celles de la pression, en bars, en ordonnée. La pression anodique à l'entrée 6 dans la pile est régulée à une valeur de consigne Pₙₒₘ par le biais de la vanne proportionnelle 4 et du régulateur 5. L'unité de contrôle de la pile commande l'ouverture de la vanne de purge 2. Dès que la vanne purge est ouverte à l'instant t0, on observe une diminution rapide de la pression d'hydrogène mesurée par le capteur de pression 3. Quand la pression atteint le seuil P_{low}, la vanne de purge 2 est refermée. La durée d'ouverture T de la vanne de purge, égale à t1 - t0, est utilisée par le calculateur comme indicateur de présence d'eau à l'anode. En effet, on observe que plus il y a d'eau liquide à la sortie de l'anode et plus le temps pour atteindre la pression P_{low} sera long en raison de la très haute viscosité ou densité de l'eau et du temps qu'elle met pour s'échapper par la vanne de purge en comparaison à la situation où il n'y aurait que du gaz à être évacué par cette même vanne de purge. Pendant le temps d'ouverture de la vanne de purge 2, la commande issue du régulateur de pression 5 est figée à la valeur présente à l'instant précédent la purge de façon à ce que la contre réaction de la vanne proportionnelle 4 ne vienne pas perturber l'évolution de la pression pendant la purge. Immédiatement après la purge, le régulateur de pression est libéré et activera à nouveau la vanne proportionnelle 4 pour remonter à la pression cible Pₙₒₘ.

La durée T de la purge s'adapte donc automatiquement en fonction de la quantité d'eau liquide à l'anode. Plus il y aura d'eau et plus le temps pour atteindre la pression P_{low} sera important. Le temps de purge s'allongera automatiquement en cas de présence d'eau de façon à tendre à compenser le temps de purge pendant laquelle la vanne de purge 2 était occupée à évacuer de l'eau et non du gaz. En plus de cette adaptation automatique de la durée de la purge, en cas de présence d'eau, le temps entre deux purges successives ou période est également réduit pour une meilleure compensation.

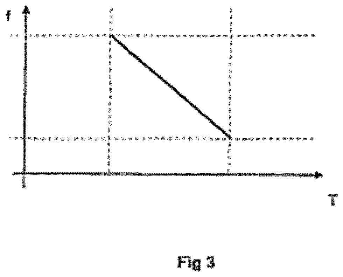

La figure 3 montre la relation entre la durée T en secondes de la purge mesurée par l'unité de contrôle de la pile et la périodicité f en secondes appliquée entre les purges. On voit que plus la durée de purge est longue, révélant une présence d'eau de plus en plus importante, plus les purges successives seront rapprochées pour favoriser l'évacuation de l'eau en excès et assurer une purge suffisante en dépit de la présence d'eau. Cette cartographie est prédéterminée au moyen d'une calibration fine préalable pour garantir que l'eau liquide à l'anode soit suffisamment drainée afin de ne pas dégrader la pile, mais sans provoquer une évacuation en excès pour ne pas gaspiller d'hydrogène, et cela dans toutes les conditions de fonctionnement de la pile à combustible.

Par exemple, la périodicité des purges pourra varier de 2s à 20s pour une durée d'ouverture variant respectivement de 500ms à 100ms. La première purge est déclenchée par l'unité de contrôle de la pile après un temps de fonctionnement préétabli, par exemple après quelques secondes de mise en fonctionnement de la pile. On utilise ensuite une valeur de sortie (la durée d'ouverture de la vanne de purge) pour déterminer la périodicité des purges suivantes.

Dans une variante, on peut définir une durée d'ouverture minimum et une durée d'ouverture maximum de la vanne de purge 2 et stocker ces valeurs dans la mémoire de l'unité de contrôle de la pile de façon à détecter les cas de défaillance (lorsque la vanne de purge 2 est bloquée en étant fermée ou ouverte ou encore une éventuelle anomalie sur le circuit d'hydrogène).

Alternativement, on peut observer la cohérence de l'évolution de la pression à l'entrée du circuit anodique. Pour la détection de vanne de purge bloquée fermée on peut contrôler l'atteinte de la valeur de pression P_{low} au terme de la durée d'ouverture maximale. Pour la détection de purge bloquée ouverte, on peut contrôler que la pression revienne à Pₙₒₘ après fermeture de la vanne de purge. Ainsi, si lors du fonctionnement, la durée mesurée pour l'atteinte de la valeur de pression P_{low} à partir du moment où l'unité de contrôle commande l'ouverture de la vanne de purge dépasse une valeur maximum préétablie, on peut en déduire que la vanne de purge est bloquée en position fermée. Dans le cas où l'unité de contrôle commande la fermeture de la vanne de purge à partir de la P_{low} et que la pression mesurée n'atteint pas Pₙₒₘ assez rapidement, dans un intervalle de temps préétabli, on peut en déduire que la vanne de purge est bloquée en position ouverte. L'unité de contrôle peut dans ce cas afficher des messages d'erreur correspondant à l'anomalie détectée.

## Revendications

1. Méthode de purge du circuit anodique (10) d'alimentation en hydrogène d'une pile (1) à combustible dans laquelle on fournit de l'hydrogène à une pression nominale (Pₙₒₘ) à l'entrée de la pile, **caractérisée en ce que** l'on répète, à une périodicité prédéterminée, les étapes suivantes :
- on commande l'ouverture d'une vanne de purge (2) de l'hydrogène agencée sur la sortie du circuit anodique (10) ;
- on mesure la pression de l'hydrogène à l'entrée du circuit anodique de la pile et on compare la valeur mesurée avec une valeur seuil prédéterminée de la pression (P_{low}) et
- on ferme la vanne de purge lorsque la pression mesurée est égale ou inférieure à la valeur seuil prédéterminée de la pression (P_{low}).

2. Méthode selon la revendication 1, **caractérisée en ce que** l'on mesure la durée d'ouverture de la vanne de purge (2) et **en ce que** l'on adapte ladite périodicité en fonction de la durée mesurée lors d'une purge préalable.

3. Méthode selon l'une des revendications précédentes, **caractérisée en ce que** l'alimentation en hydrogène de la pile (1) se fait à partir d'un réservoir moyennant une électrovanne proportionnelle (4) pilotée par un régulateur de pression (5) relié à un capteur de pression (3).

4. Méthode selon la revendication 3, **caractérisée en ce que** ledit régulateur de pression (5) est désactivé pendant la durée d'ouverture de la vanne de purge (2).

5. Méthode selon l'une des revendications précédentes, **caractérisée en ce que** les valeurs seuil prédéterminées de la pression (P_{low}) sont comprises entre 70 et 95% de la pression nominale (Pnom).

6. Méthode selon l'une des revendications précédentes, **caractérisée en ce que** les valeurs de la pression nominale (Pₙₒₘ) sont comprises entre 1,5 et 2 bar.

7. Méthode selon l'une des revendications précédentes, **caractérisée en ce que** ladite périodicité est comprise entre 2s et 20s pour une durée d'ouverture de la vanne de purge (2) comprise entre 500ms et 100ms.

8. Méthode selon l'une des revendications précédentes, **caractérisée en ce que** lors de l'ouverture de la vanne de purge on mesure la durée au bout de laquelle la valeur seuil prédéterminée de la pression (P_{low}) est atteinte en partant de la pression nominale (Pₙₒₘ) et **en ce que** on la compare à une valeur maximum et **en ce qu'**on déduit que la vanne de purge (2) est bloquée en position fermée si cette durée dépasse cette valeur maximum.

9. Méthode selon l'une des revendications précédentes, **caractérisée en ce que** lors de la fermeture de la vanne de purge (2) on mesure la durée au bout de laquelle la pression nominale (Pₙₒₘ) est atteinte en partant de la valeur seuil prédéterminée de la pression (P_{low}) et on la compare à un intervalle de temps et **en ce qu'**on déduit que la vanne de purge est bloquée en position ouverte si cette durée dépasse cet intervalle de temps.

10. Dispositif comprenant une vanne de purge (2), un capteur de pression et une unité de contrôle d'une pile à combustible pour la mise en œuvre de la méthode selon l'une des revendications précédentes.

11. Utilisation d'un dispositif selon la revendication 10 dans une pile à combustible.
